# EUROPEAN PATENT SPECIFICATION

(11) **EP 2 197 291 B1**
(45) Date of publication and mention of the grant of the patent: **30.11.2011**
(21) Application number: 07827692.0
(22) Date of filing: 14.09.2007
(51) Int. Cl.: A23G 9/22, A23G 9/28, B67D 1/08

(54) **MACHINE FOR PRODUCING AND DISPENSING LIQUID OR SEMILIQUID FOOD PRODUCTS**
MASCHINE FÜR DIE HERSTELLUNG UND ABGABE VON FLÜSSIGEN ODER HALBFLÜSSIGEN NAHRUNGSMITTELPRODUKTEN
MACHINE POUR LA PRODUCTION ET LA DISTRIBUTION DE PRODUITS ALIMENTAIRES LIQUIDES OU SEMI-LIQUIDES

(43) Date of publication of application: 23.06.2010
(73) Proprietor: Carpigiani Group - ALI S.p.A., 20123 Milano (IT)
(72) Inventor: COCCHI, Gino, 40141 Bologna (IT); LAZZARINI, Roberto, 40136 Reggio Emilia (IT); ZANIBONI, Gianni, 40044 Borgonuovo Di Sasso Marconi (Bologna) (IT)
(74) Representative: Baroni, Matteo
(86) International application number: PCT/IT2007/000640
(87) International publication number: WO 2009/034592

(56) References cited:
- EP-A- 1 829 453
- EP-A- 1 905 730
- WO-A-00/70963
- WO-A-01/43088
- WO-A-02/12112
- WO-A-02/090841
- WO-A-2004/091324
- WO-A-2006/081727
- GB-A- 2 283 845
- US-A- 4 551 025
- US-A- 4 719 574
- US-A- 5 481 260
- US-A- 5 730 324
- US-A1- 2003 077 364
- US-A1- 2003 121 937
- US-A1- 2004 251 270
- US-B1- 6 637 214

## Description

The present invention relates to a machine for producing and dispensing liquid or semiliquid food products.

The present invention particularly relates, but not in any limiting sense, to machines for producing and dispensing water-ices, sorbet-ices, ice-creams, soft ice-creams, milk cream, yoghurts and the like, and to machines for producing and preserving blends or mixtures for ice-creams, creams, sauces, soups, kneaded mixtures in general and the like.

As known, these machines comprise a holding vat for a liquid base product, and a treatment circuit for the base product, to obtain said consumer goods. The latter can then be dispensed by means of suitable dispensers and/or preserved in a conservation tank.

The treatment circuit can comprise, depending on the type of machine taken into account, heat treatment means to cool or heat the product, a whisking cylinder to keep the product to some degree of fluidity, mixing means to mix the base product with an auxiliary product, such as a seasoning substance, etc.

Generally, the machines are provided with a plurality of actuators, interlocked with a control unit, so that the different working steps of the base product are performed following a preset program.

However, due to a series of reasons of different nature, faults, malfunctions, failures in the working process, etc. may be likely to occur at the inside of the machine.

In addition, also in the absence of these unforeseen events, it is required that the machine be suitably adjusted and set, depending on the type of product to be obtained and the characteristics the product must have, for example.

However, it is impossible for an operator to be always present in the vicinity of the machine in order to deal with the most urgent situations; therefore it may happen that a machine starts operating in an incorrect manner or stops running without any person capable of facing the situation sufficiently quickly being present.

The importance of this aspect clearly appears if we think that these machines are set for treatment and supply of foodstuffs characterised by a very delicate equilibrium to such an extent that even with small variations in the working or preservation conditions to which they are submitted, they run the risk of becoming unusable.

**Document** WO 2006/081727 discloses a multifunctional ice cream machine that can not only make ice cream, but play music and figure video due to having multimedia playing device. The present ice cream machine further have intelligent real-time detection device, so that it can master machine operation clearly by real-time sensing detecting primary parts, deal with and resolve machine malfunction rapidly and exactly by auto-protection interactive control or long-distance guidance, and avoid blindfold condition of malfunction.

**Document** US2003/077364 discloses a frozen confection dispensing machine for dispensing a predetermined volume of a frozen confection. In one embodiment, the machine includes a user interface and programmable control circuit to allow an operator to select the volume of extruded frozen confection for a particular product. In another embodiment, the machine includes a readily accessible hollow member to supply the machine with additional mix without interrupting extrusion of the frozen confection. In another embodiment, a plurality of frozen confection dispensing machines are located adjacent a conveyor belt for filling a pastry product with a selected volume of frozen confection.

**Document** WO 00/70963 discloses a softserve product refrigeration and dispensing machine having numerous novel features, including a novel door and product dispensing apparatus having features to inhibit condensation and to provide a product dispenser design which may be easily flushed with no retention of food stuffs and the like and configured to require minimal lubrication. The novel door assembly allows for sealing of the freezing chamber.

In **document** WO 2004/091324 a soft serve frozen food such as ice cream and frozen yogurt is pumped from a sanitary reservoir into a closed loop flow path that includes an emulsion barrel assembly that intimately mixes the ingredients in the food composition into a smooth consistency frozen food product. A dispensing head allows servings of soft serve food to be withdrawn from the closed loop. A clean-in-place system permits all critical parts of the machine that come in contact with food to be cleaned and sanitized without having to take the machine apart.

**Document** US 2004/251270 discloses a soft serve ice cream vending machine. The vending machine includes a machine cabinet; a door pivotably connected to he machine cabinet; the door including a cup dispensing slot and an ice cream dispensing slot; a product dispensing button connected to the door; a cup dispenser adapted to dispense a cup and connected to the door; a money acceptor connected to the door; a flexible product container connected to a freezer engine adapted to receive a product, the freezer engine having an outlet proximate to the ice cream dispensing slot; a venturi air valve connected to the freezer engine; a spigot control device connected to the freezer engine and to the product dispensing button, whereby upon engagement of the product dispensing button the spigot control device engages the freezer engine for a predetermined period of time.

**Document** WO 01/43088 discloses a vending machine that in addition to the normal coin acceptor and selection keypad has a display screen which is used in conjunction with the keypad to interact with the user. The vending machine and similar vending machines form part of a system communicating with a central computer which monitors stock levels and machine functions, and also derives information, such as marketing information and customer preferences, from the user interaction and may modify displayed material accordingly.

**Document** US 2003/121937 discloses a beverage dispensing system including a beverage dispenser which forms and dispenses a beverage and a processor for monitoring the beverage dispenser. The beverage dispenser operates under various parameters including a first parameter that is indicative of the quality of the beverage to be dispensed and a second parameter that is indicative as to when routine maintenance is to be scheduled. The processor monitors the various parameters under which the beverage dispenser operates and determines whether the first parameter is outside of a predetermined range. If the first parameter is outside the predetermined range, the processor sends a signal regarding a request for immediate repair service. The second parameter is also monitored and the routine maintenance is scheduled based thereon.

In **document** WO 02/12112 a remote data acquisition and transmission system and method are dislosed. A plurality of application controllers are disclosed. A plurality of application controllers are interfaced with remote beverage dispensing equipment from which operation data is acquired by the application controllers. The application controllers communicate with an application host via a local area network, and the application host can communicate with a network operations center using a wide are network interface.

**Document** EP 1905730 discloses a beverage dispense system that has sensors for monitoring one or more characteristics relating to dispense of a beverage and outputting a signal representative of the or each monitored characteristic, and a control system responsive to signals received from the sensors controlling operation of the dispense system.

**Document** US 5481260 discloses an apparatus and methods for monitoring a characteristic of fluid flow through a fluid dispenser that permit adverse flow conditions to be monitored, analyzed and displayed to an operator. The monitor samples either the static or firing pressure a predetermined number of times and calculates an average static and firing pressure over the sampling period. The average pressure values are compared to high and low warning and alarm limits and warning and alarm error codes are produced as a function thereof. In addition, individual sampled values are compared to the high and low warning and alarm limits and pressure values exceeding the limits during a sampling period are counted. Warning and alarm error codes are produced as a function of the counted values exceeding predetermined count values. The monitor control system discriminates between alarm conditions requiring immediate remedial attention and warning conditions the progress of which may be tracked and remedial action taken prior to an alarm condition occurring. Each fluid dispenser has a fluid monitor connected to a remote operator control with a data communications network. Consequently, an operator may monitor all of the monitor controls from a remote location. The monitor provides diagnostics that provide suggestions to the operator of potential causes of the particular adverse flow condition detected. Further, the monitor provides a more reliable calibration method and a swivel mounting for a attaching a sensor to the dispensing unit.

**Document** US 5730324 discloses a post-mix beverage dispensing system for delivering syrup from a supply reservoir to one or more dispensing stations and to one or more drink dispensing units at each station including a syrup dispensing valve for the syrup in the reservoir. The syrup is adapted to be delivered from the reservoir at the delivery pressure generated by the reservoir pump and which, in light of a pressure drop between the reservoir and dispensing station or stations, may or may not provide a predetermined syrup dispensing pressure required at the dispensing station for dispensing a predetermined quantity of syrup through the dispensing valve to provide the desired syrup to soda water ratio in a dispensed drink.

**Document** US 6637214 discloses a method and machine for making frozen custard or similar products including a freezing barrel, a pump for providing liquid mix to the freezing barrel, a dasher positioned in the freezing barrel for driving product through and dispensing the product from the freezing barrel, and a refrigeration system for chilling the freezing barrel. A user interface allows an operator to select from among a plurality of production rates. A system controller automatically controls the pumping rate, dasher motor speed, and chilling level to produce a product in the freezing barrel at the desired production rate and having the desired product quality and consistency. An ultrasonic sensor may be employed to monitor a level of liquid mix in a liquid mix container. A warning signal may be provided to the operator when the level of mix in the container runs low.

In **Document** EP 1829453 an automatic machine for producing and dispensing semi-liquid foodstuffs, in particular ice creams, has a tank for containing a basic product to be processed to obtain the ice creams, a basic product feed and processing circuit, in communication with the tank to draw out the basic product, one or more dispenser taps positioned at an outfeed end of the feed and processing circuit, actuators for operating the dispenser taps, a check and control unit for the actuators and at least one sensor for detecting the quantity of ice cream dispensed, associated with the control unit and designed to detect at least part of the profile of the ice cream dispensed.

**Document** US 4551025 a soft ice cream machine which has a controller in contact with a freezing chamber is disclosed. The controller is provided with temperature information from a temperature sensor, which senses when the temperature of the ice cream is approaching a temperature which could bring about freeze-up and disables the compressor until the mixture warms up a selectable amount. The controller automatically switches the refrigeration compressor and the mixer and auger to a standby condition when the controller senses that the dispensing spigot has not been actuated. The controller further senses when the temperature of the ice cream in the freezing chamber is approaching a temperature which would give an inadequately frozen product unacceptable to consumers.

In document US 4719574 a batch control system is used in a batching system for controlling the batching of a fluid material from one container to another container through a conduit having a pump coupled therein, a flowmeter coupled therein and a valve coupled therein. The batch control system includes a microprocessor; a keypad coupled to said microprocessor; a battery backed non-volatile memory coupled to the microprocessor; a serial port in the microprocessor; an alpha-numeric display coupled to the microprocessor; relay control outputs coupled to said microprocessor and to relays for controlling energization of the pump and the valve, respectively; at least one input coupled to the microprocessor for receiving count pulses from the flowmeter; and, outputs for supply data to a station remote from the location of the batch control system, such as a manager's office or a station at the location of one of the containers.

In **document** WO 02/090841 is disclosed a system provided for monitoring the food product and refrigeration system performance of a remote location. The system includes a management center in communication with a remote location through a communications network. The management center receives performance information of the remote location with respect to operational parameters of components of a refrigeration system of the remote location, and temperature data, at which food product has been stored. The management center utilizes software modules to analyze the performance information and provide alarms for scenarios such as food safety and quality issues, failure of a component of the refrigeration system or preventative maintenance for components of the refrigeration system. A third party computer may also communicate with the management center and the remote location for reviewing performance information.

**Document** GB 2283845 discloses a food temperature monitoring system (10) comprising a plurality of remote sensor units communicating by e.g. radio with a central control unit having a memory, display, central processing unit, audio and/or visual alarm means and a keyboard mostly expose to danger the integrity of the machine and/or the products treated and supplied by the same can be faced very quickly.

It is apparent that the steps of controlling and setting the working operations are very critical in said machines.

Accordingly, it is an aim of the present invention to provide a machine for producing and dispensing liquid or semiliquid food products that can be easily monitored and controlled, so that all situations that

In accordance with the invention, this aim is achieved by a machine for producing and dispensing liquid or semiliquid food products comprising the technical features set out in one or more of the appended claims.

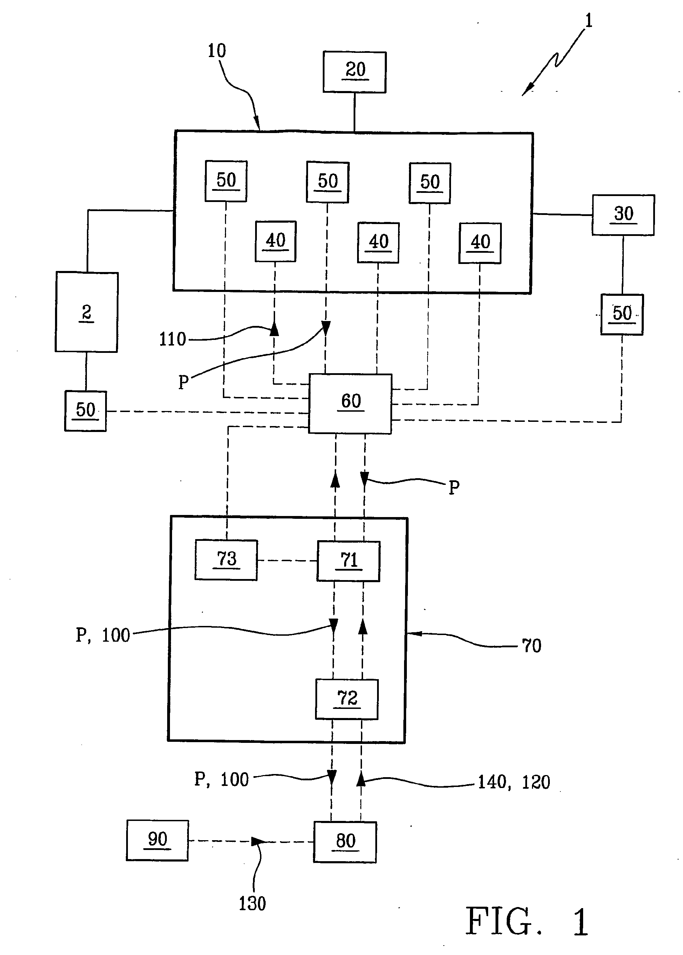

The technical features of the invention, according to the above aims, clearly appear from the contents of the claims reproduced below and the advantages of same will be more apparent in the following detailed description given with reference to the accompanying drawing representing an embodiment of the invention by way of non-limiting example. Fig. 1 in particular shows a block diagram of the machine in accordance with the present invention.

In the accompanying drawing, a machine in accordance with the present invention has been generally identified with reference numeral 1.

First of all, machine 1 comprises a holding vat 2 for a liquid base product. The liquid base product can be, only by way of example, liquid milk cream, a mixture of products for ice-cream, a syrup; generally, the liquid base product can be any liquid product used for producing a liquid or semiliquid finished food product.

The finished food product can consist of, by way of example, water-ice, sorbet-ice, ice-cream, soft ice-cream, milk cream, yoghurt, a yoghurt-ice-cream blend or mixture for ice-cream, cream, sauce, soup, a kneaded mixture in general and the like.

The finished product can also be an ice-cream frappé or shake; by the term "ice-cream frappé" or "shake" it is intended any frozen or "semifreddo" food product of neutral taste, also termed neutral ice-cream, shaken or blended together with a flavouring syrup having the desired taste and possibly with addition of soft fruit pulp or solid parts such as seeds.

To obtain the final product starting from the base product, the machine 1 comprises a treatment circuit 10. In turn, said treatment circuit 10 can comprise heat treatment means, to cool/heat the base product and/or finished product; the heat treatment means can also be designed to keep the base product and/or finished product to a predetermined temperature.

The heat treatment 10 may comprise a whipping-extruding device, particularly if the finished product consists of whipped cream.

The treatment circuit 10 may also comprise a whisking device particularly if the finished product consists of ice-cream.

The treatment circuit 10 may also comprise a blending/mixing unit, particularly if the final product consists of ice-cream frappé or shake.

The treatment circuit 10 is associated with pump means 20 enabling the base product to move forward in the treatment circuit 10 until reaching the dispensing means 30 suitably set to enable dispensing of the finished product.

The dispensing means 30 can consist of nozzles or taps; said dispensing means 30 can be manually adjusted or regulated by suitable electronic control means cooperating with a sensor adapted to detect the amount of finished product dispensed, so as to establish the instant at which the dispensing means must be automatically shut off.

The machine comprises one or more actuators 40, acting on the base product, the finished product and/or parts of the machine 1 itself.

Preferably, actuators 40 are part of said treatment circuit 10 or are associated therewith.

It will be noted that in the present context, for actuators it is intended all devices or members acting on the base product, the finished product, possible intermediate products in order to vary any physical or mechanical, static or dynamic feature of same; in the present context the actuators can also consist of any device or member capable of actively operating on any component of the machine 1.

By way of example alone, defined as actuators can be the devices adapted to cause advancing of the base product along the treatment circuit, the devices designed for whisking of the finished product or blending of two or more base o intermediate products, the devices suitable for heat-treatment of the products present in the machine 1, in order to increase, reduce or stabilise the temperature of same, automatic dispensing devices for the finished product, the devices (such as a gear pump) for air-pressurisation of the liquid mixture constituting the base product for the so-called soft ice-cream, in order to give the finished product a more or less marked creamy consistency, etc.

The machine 1 further comprises one or more sensors 50 to detect one or more operating parameters P of the machine 1 itself.

These operating parameters P can be, by way of example alone, temperature (of the base product, the finished product or specific areas within the machine 1), pressure (within ducts or containers where the different products can be contained), levels or amounts (of products present within the machine or dispensed through the dispensing means), percentage in the composition of said products, currents and/or voltages (representative of the different circuits and electric/electronic devices present in the machine 1, such as the above mentioned actuators), movement speed of the products at the inside of the machine or of moving parts of the machine itself, physical characteristics of the base product and/or the finished product (e.g. consistency), state variables of the different members, switches, actuators present in the machine 1, etc.

Preferably, the parameter P is representative of a malfunction or alarm condition of said machine 1.

Preferably, the machine 1 further comprises a local processing unit 60 connected to said actuators 40 and sensors 50 and designed to supervise operation of the machine 1.

Practically, the local processing unit 60 can be an electronic control card of known type, suitably set to cause operation of the machine 1 following a previously entered program so as to obtain the finished product starting from one or more base products.

The machine 1 further comprises an interfacing unit 70 operatively associated with at least one of sensors 50 to detect a respective operating parameter P and transmit it to a remote processing unit 80 (to be dealt with in more detail later on). The interfacing unit 70 is preferably provided with a management module 71 operatively associated with the local processing unit 60 to receive said operating parameter P, compare it with a reference value and send it, depending on the result of this comparison, to the remote processing unit 80.

In particular, connection between the local processing unit 60 and management module 71 of the interfacing unit 70 is obtained through a connection of the serial type (e.g. RS232).

Advantageously, the management module 71 receives a plurality of operating parameters P so as to be able to define a complete picture of the situation of the machine 1.

This picture of the situation may comprise both the so-called "snap-shot", i.e. the assembly of data on the input of the local processing unit 60, of the state of the outputs of same and of some statistical data, and the so-called "parametersnap", i.e. the assembly of the input data packets defining the operating modes according to which the machine 1 is set.

The operating parameters P are continuously supplied, at a predetermined frequency, by the local processing unit to the management module 71.

In the preferred embodiment, the "snapshot" and "parametersnap" are transmitted to the management module 71 at different frequencies, e.g. the "snapshot" every 2 seconds and the "parametersnap" every 10 seconds.

The management module 71 carries out a comparison between the operating parameters P and respective reference values; should important differences emerge, the management module 71 will send a suitable notification signal 100 to the remote processing unit 80.

The notification signal 100 can advantageously incorporate the operating parameters P obtained from the last reception.

The reference values can be prestored values; alternatively, the reference values can be the operating parameters P previously received (e.g. through the second-last reception step) from the management module 71 and representative of an overall situation of correct operation of the machine 1.

In the preferred embodiment, the management module 71 following sending of said notification signal 100 to the remote processing unit 80, will also send to the remote processing unit 80, over a preset time interval, the operating parameters P detected at subsequent time instants relative to the instant at which reading of the operating parameters P that have caused transmission of the notification signal 100 has occurred.

Preferably, the management module 71 is designed to send to the remote processing unit 80, also the operating parameters P detected during a given time interval before sending of the notification signal 100; these parameters can be stored in a suitable buffer for example, so that they remain available for a certain period of time, in the event that the notification signal 100 should be generated and transmitted.

In this manner, the remote processing unit 80 not only has at its disposal the picture describing the situation at the moment the anomaly has occurred, but also evolution in time of this situation and also preferably data representative of the situation that has led to generation of the anomaly.

It is to be noted that the operating parameters P can be transmitted by the management module 71 both following detection of an anomaly (failure, malfunction, alarm), as described above, and depending on a predetermined time limit, irrespective of the true operating conditions of the machine 1, so that a sort of "historical" situation about the machine operation will be available for the remote processing unit 80.

The operating parameters P can be sent by the management module also when a predetermined value is reached by one or more counters; these counters are suitably increased/decreased during operation of the machine 1 depending on the number of dispensed portions of food product, for example.

In order to send to the remote processing unit 80, said respective operating parameter P (or said operating parameters) and/or the notification signal 100 generated by the management module 71, the interfacing unit 70 is provided with a communication module 72. Preferably, the communication module 72 can be driven between a rest condition, at which it transmits no signals, and an operating condition at which it at least transmits signals.

In more detail, the communication module 72 is normally in a rest condition; when the management module 71 must send signals (notification signal 100, operating parameters P) to the remote processing unit 80, said management module will "awake" the communication module 72 and will supply the same with data to be transmitted.

Practically, the communication module 72 can be a GSM/GPRS modem, an ADSL modem, an ISDN modem or an Ethernet module. The communication module 72 can also be a connecting module to a local network, in turn suitable for connection to a network enabling a remote connection to said remote processing unit 80; for instance, wireless modules (WiFi, Bluetooth, Zigbee, etc.) are involved.

The communication module 72 can be incorporated either into a microprocessor board (SH or ARM technologies, for example) or in an industrial PC provided with an operating system, mounted on board the machine 1; in this case the type of connection used can be Bus ISA, EISA, USB, Ethernet, WiFi, Bluetooth, ZigBee, etc. The local networks to which the communication module 72 is linked therefore enable a remote connection and a communication with the remote processing unit 80.

Generally, the communication module 72 allows access to the ISP which is the closest to the machine 1 in a direct or indirect manner, so that the remote processing unit 80 can be reached through the Internet.

Advantageously, the management module 71 can be such arranged that, on occurrence of particular alarm events, it can, in addition to performing the above described operations in order to supply the remote processing unit 80 with all necessary data, also send an SMS in an automatic manner to a GSM device of an operator responsible for it so that the latter can be immediately put on the alert.

It will be recognised that the SMS message can be directly sent by the management module 71 or can be sent by the remote processing unit 80, following data received by the management module 71 itself.

In addition to the above, the interfacing unit 70 can be operatively associated with at least one actuator 40, to make said actuator 40 receive a local command/adjustment signal 110 as a function of a remote command/adjustment signal 120 sent to the interfacing unit 70 by the remote processing unit 80.

In more detail, communication between the remote processing unit 80 and said actuator 40 takes place by means of the management module 71 and the local processing unit 60: the management module 71 causes the remote command/adjustment signal 120 to be received by the local processing unit 60 so that the latter can send the corresponding local signal 110 to the actuator.

Preferably, the interfacing unit 70 further comprises a memory 73 used for communication between management module 71 and local processing unit 60; when the management module 71 receives the remote signal 120 from the remote processing unit 80, it stores contents thereof into memory 73. The local processing unit 60 then reads these contents from memory 73 and generates the local command/adjustment signal 110 as a function of the remote signal 120.

Note that memory 73 can be also used for storing the above mentioned "snapshot"; this storage can be aimed both at a comparison between snapshots detected at different time instants, and at transmission of the snapshot to the remote processing unit 80; memory 73 can therefore be also used, if it is deemed necessary, for communication between management module 71 and remote processing unit 80.

Preferably, memory 73 can contain a snapshot buffer and/or a buffer of operating parameters P.

Only by way of example, memory 73 can be a Flash Memory, a Memory Card, a USB storage device, etc.

The remote command/adjustment signal 120 can for example refer to the so-called "parameter table"; the remote processing unit 80 sends the table containing the values that one or more setting parameters of the machine must take, by incorporating it into the remote signal 102. These values are stored onto memory 73 by the management module 71, so that the local processing unit 60 (electronic card) can pick them up and consequently update its operation, sending at least one suitable local signal 110 to the involved actuator 40 (or the involved actuators 40).

The remote command/adjustment signal 120 can also refer to the software of the local processing unit 60 or the software of the management 71 and communication 72 modules; when updating of one or more of these software programs is made necessary, the remote processing unit 80 will send said updating following the above described technique, preferably also using memory 73 the software of which is temporarily stored to be then really installed, on occurrence of a restart of the machine 1, for example.

Advantageously, also communication from the remote processing unit 80 to the management module 71 takes place through the communication module 72.

As above said, in particular when the communication module 72 uses the GPRS connectivity, the communication module 72 is usually in the rest condition, so that it cannot sent possible remote command/adjustment signals 120 received to the management module 71.

When the remote processing unit 80 must send a remote signal 120 to the management module 71, it first "awakes" the communication module 72 through a suitable connection request signal 130. Practically, the request signal 130 may consist of a true telephone call; the communication module 72 for example provided with a suitable SIM card, on reception of this telephone call, is activated and reaches its operating condition so that it can receive the remote command/adjustment signal 120 and send it to the management module 71.

Still in the event of a connectivity of the GPRS type, the rest condition of the communication module 72 is that at which this module is linked to the GPRS network, but there are not active data transmissions; at the moment the management module 71 or the remote processing unit 80 need to transmit one or more of the above described pieces of information, they awake the communication module 72 that, through activation of data transmission, will enable the required exchange of information.

Preferably, the remote command/adjustment signal 120 is generated by the remote processing unit 80 as a function of a main signal 140 transmitted by a computer 90 remotely connected to the remote processing unit 80 itself.

In other words, the remote processing unit 80 acts as a server making available the different data received from the management module 71 of the machine 1 through the Internet, following criteria of selective accessibility to inhibit the various data from being made usable by uninterested individuals too.

The machine owner and/or the operators responsible for control and servicing of said machine 1 can therefore accede to that which is made available by the remote processing unit 80 through the Internet and a remote computer 90.

The owner and/or the operators therefore will be able to interact by sending to the remote processing unit 90, at least one main signal 140 in which for instance parameters that are to be inputted, regulated, modified are specified. Depending on this main signal 140, the remote processing unit 80 will generate at least one respective remote command/adjustment signal 120 so as to be able to put into practice that which has been transmitted by the remote computer 90, following the above described techniques.

By means of the remote computer 90 and the remote processing unit 80 it is therefore possible to make available a remote monitoring service, in real time, of the machine 1, a remote control service through which the various software programs can be updated and the operating parameters of the machine 1 can be modified, a "reporting" service for receiving series of information of technical/commercial character either periodically or on occurrence of predetermined events, and a remote diagnosis service where, in addition to said monitoring, it is possible to determine from a remote site, which are the causes of failure of the machine 1.

It will be recognised that while reference has been hitherto made to a single machine 1, the monitoring system can be applied to a plurality of machines that, exactly due to the above mentioned remote connections, can be positioned everywhere (at any point that can be reached by these connections).

It is therefore apparent that a single operator, by virtue of the above, will be able to remotely monitor and control any number of machines, therefore maximising the efficiency of the control activity on these machines.

The invention achieves important advantages.

First of all, the machine of the invention can be easily monitored and controlled from a remote site, so that all situations that mostly expose to danger the integrity of the machine and/or the products treated and supplied by the latter can be faced very quickly.

In addition, the connecting structure mounted on the machine in accordance with the invention can be easily applied to already existing machines as well, which are provided with an electronics of their own on board, so that the possibility of use of the invention is made very large.

The invention thus conceived is clearly susceptible of industrial application; it can be also submitted to many modifications and variations all falling within the scope of the inventive idea; in addition, all details can be replaced by technically equivalent elements.

## Claims

1. A machine for producing and dispensing liquid or semiliquid food products, comprising:
- a holding vat (2) for a liquid base product;
- a treatment circuit (10) for said liquid base product, so as to obtain a liquid or semiliquid food product;
- dispensing means (30) to dispense said food product;
- one or more actuators (40) acting on said base product, food product and/or parts of said machine (1);
- one or more sensors (50) to detect one or more operating parameters (P) of said machine (1),
- an interfacing unit (70) operatively associated with at least one of said one or more sensors (50) to receive a respective one of said one or more operating parameters (P) and transmit it to a remore processing unit (80);
- a local processing unit (60) connected at least to said sensor (50) and said actuator (40) and designed to supervise operation of the machine (1);
said interfacing unit (70) comprising a management module (71) operatively associated with said local processing unit (60) in order to receive said respective operating parameter (P), compare it with a reference value and transmit a notification signal (100) to said remote processing unit (80), depending on said comparison;
said management module (71) being designed to carry out a series of sending or transmitting operations, subsequent to the above transmission of said notification signal (100) to said remote processing unit (80), to send a series of detected measures of said respective operating parameter (P) to said remote processing unit (80), during a predetermined time interval;
said series of detected measures comprising measures preceding in time sending of said notification signal (100) and/or measures following in time sending of said notification signal (100).

2. A machine as claimed in the preceding claim, **characterised in that** said reference value is defined by precious reading of said respective operating parameter (P).

3. A machine as claimed in claim 1, **characterised in that** transmission of said respective operating parameter (P) to said remote processing unit (80) is started at a predetermined time limit.

4. A machine as claimed in claim 1, **characterised in that** transmission of said respective operating parameter (P) to said remote processing unit (80) is started following a situation of failure, malfunction or alarm of the machine (1).

5. A machine as claimed in anyone of the preceding claims, **characterised in that** said interfacing unit (70) further comprises a communication module (72) at least for sending said respective parameter (P) and/or notification signal (100) to said remote processing unit (80).

6. A machine as claimed in the preceding claim, **characterised in that** said communication module (72) can be driven between a rest condition at which it transmits no signals, and an operating condition at which at least it transmits signals.

7. A machine as claimed in the preceding claim, **characterised in that** said communication module (72) is normally in said rest condition, said communication module (72) being driven to the operating condition by said management module (71) to send said respective operating parameter (P) to said remote processing unit (80).

8. A machine as claimed in anyone of the preceding claims, **characterised in that** said interfacing unit (70) is further operatively associated with at least one of said one or more actuators (40) to make the latter receive a local command/adjustment signal (110) as a function of a remote command/adjustment signal (120) sent to said interfacing unit (40) by said remote processing unit (80).

9. A machine as claimed in claims 1 and 8, **characterised in that** said management module is associated with said local processing unit (60) to make the latter receive said remote command/adjustment signal (120) and enable said local processing unit (60) to send said local command/adjustment signal (110) to said actuator (40).

10. A machine as claimed in the preceding claim, **characterised in that** said interfacing unit (70) further comprises a memory (73), said management module (71) being associated with said memory (73) to store said remote command/adjustment signal (120), said local processing unit (60) being associated with said memory (73) to read said remote signal (120) and generate said local signal (110), as a function of said remote signal.

11. A machine as claimed in the preceding claim, **characterised in that** said memory (73) is operatively associated with said management module (71) for storage of said operating parameter/s (P) in order to compare them and/or transmit them to said remote processing unit (80).

12. A machine as claimed in anyone of claims 9 to 11, **characterised in that** said communication module (72) is driven from the rest condition to the operating condition by a connection request signal (130) transmitted by said remote processing unit (80), said communication module (72) being able to receive said remote command/adjustment signal (120) when it is in the operating condition.

13. A machine as claimed in claim 8, **characterised in that** said remote command/adjustment signal (120) is generated by said remote processing unit (80) as a function of a main signal (140) transmitted by a computer (90) remotely connected to said remote processing unit (80).

## Patentansprüche

1. Maschine für die Herstellung und Abgabe von flüssigen oder halbflüssigen Nahrungsmittelprodukten, umfassend:
- ein Behälterbecken (2) für ein flüssiges Basisprodukt,
- einen Behandlungskreis (10) für das flüssige Basisprodukt, sodass ein flüssiges oder halbflüssiges Nahrungsmittelprodukt erhalten wird,
- Abgabemittel (30) zur Abgabe des Nahrungsmittelprodukts;
- einen oder mehrere Aktoren (40), die auf das Basisprodukt, Nahrungsmittelprodukt und/oder Teile der Maschine (1) einwirken,
- einen oder mehrere Sensoren (50) zur Erfassung eines oder mehrerer Betriebsparameter (P) der Maschine (1),
- eine Schnittstelleneinheit (70), die betriebsbereit an mindestens einen der einen oder mehreren Sensoren (50) angeschlossen ist, um einen entsprechenden der einen oder mehreren Betriebsparameter (P) zu empfangen und ihn an eine entfernte Verarbeitungseinheit (80) zu übertragen,
- eine lokale Verarbeitungseinheit (60), die mindestens mit dem Sensor (50) und dem Aktor (40) verbunden und dazu konzipiert ist, den Betrieb der Maschine (1) zu überwachen,
wobei die Schnittstelleneinheit (70) ein Verwaltungsmodul (71) umfasst, das betriebsbereit an die lokale Verarbeitungseinheit (60) angeschlossen ist, um den entsprechenden Betriebsparameter (P) zu empfangen, ihn mit einem Referenzwert zu vergleichen und ein Benachrichtigungssignal (100) an die entfernte Verarbeitungseinheit (80) in Abhängigkeit vom Vergleich zu übertragen,
wobei das Verwaltungsmodul (71) dazu konzipiert ist, eine Reihe von Sende- oder Übertragungsoperationen auszuführen, die auf die zuvor genannte Übertragung des Benachrichtigungssignals (100) an die entfernte Verarbeitungseinheit (80) folgen, um eine Reihe von erfassten Erhebungen des entsprechenden Betriebsparameters (P) an die entfernte Verarbeitungseinheit (80) während eines festgelegten Zeitintervalls zu senden,
wobei die Reihe von erfassten Erhebungen, Erhebungen zeitlich vor dem Senden des Benachrichtigungssignals (100) und/oder Erhebungen zeitlich nach dem Senden des Benachrichtigungssignals (100) umfasst.

2. Maschine nach dem vorangehenden Anspruch, **dadurch gekennzeichnet, dass** der Referenzwert durch vorheriges Lesen des entsprechenden Betriebsparameters (P) definiert wird.

3. Maschine nach Anspruch 1, **dadurch gekennzeichnet, dass** die Übertragung des entsprechenden Betriebsparameters (P) an die entfernte Verarbeitungseinheit (80) bei einem festgelegten Zeitintervall begonnen wird.

4. Maschine nach Anspruch 1, **dadurch gekennzeichnet, dass** die Übertragung des entsprechenden Betriebsparameters (P) an die entfernte Verarbeitungseinheit (80) nach einer Ausfallsituation, einer Funktionsstörung oder einem Alarm der Maschine begonnen wird.

5. Maschine nach einem der vorangehenden Ansprüche, **dadurch gekennzeichnet, dass** die Schnittstelleneinheit (70) ferner ein Kommunikationsmodul (72) zumindest zum Senden des entsprechenden Parameters (P) und/oder Benachrichtigungssignals (100) an die entfernte Verarbeitungseinheit (80) umfasst.

6. Maschine nach dem vorangehenden Anspruch, **dadurch gekennzeichnet, dass** das Kommunikationsmodul (72) zwischen einem Ruhezustand, in dem es keine Signale überträgt, und einem Betriebszustand, in dem es zumindest Signale überträgt, steuerbar ist.

7. Maschine nach dem vorangehenden Anspruch, **dadurch gekennzeichnet, dass** das Kommunikationsmodul (72) normalerweise im Ruhezustand ist, wobei das Kommunikationsmodul (72) durch das Verwaltungsmodul (71) in den Betriebszustand gesteuert wird, um den entsprechenden Betriebsparameter (P) an die entfernte Verarbeitungseinheit (80) zu senden.

8. Maschine nach einem der vorangehenden Ansprüche, **dadurch gekennzeichnet, dass** die Schnittstelleneinheit (70) ferner betriebsbereit mindestens an einen der einen oder mehreren Aktoren (40) angeschlossen ist, um diesen ein lokales Befehls-/Anpassungssignal (110) in Abhängigkeit eines entfernten Befehls/Anpassungssignals (120), das an die Schnittstelleneinheit (40) durch die entfernte Verarbeitungseinheit (80) gesendet wurde, empfangen zu lassen.

9. Maschine nach den Ansprüchen 1 und 8, **dadurch gekennzeichnet, dass** das Verwaltungsmodul an die lokale Verarbeitungseinheit (60) angeschlossen ist, um diese ein entferntes Befehls-/Anpassungssignal (120) empfangen zu lassen und zu ermöglichen, dass die lokale Verarbeitungseinheit (60) das lokale Befehls-/Anpassungssignal (110) an den Aktor (40) sendet.

10. Maschine nach dem vorangehenden Anspruch, **dadurch gekennzeichnet, dass** die Schnittstelleneinheit (70) ferner einen Speicher (73) umfasst, wobei das Verwaltungsmodul (71) an den Speicher (73) angeschlossen ist, um das entfernte Befehls-/Anpassungssignal (120) zu speichern, wobei die lokale Verarbeitungseinheit (60) an den Speicher (73) angeschlossen ist, um das entfernte Signal (120) zu lesen und das lokale Signal (110) in Abhängigkeit des entfernten Signals zu erzeugen.

11. Maschine nach dem vorangehenden Anspruch, **dadurch gekennzeichnet, dass** der Speicher (73) betriebsbereit an das Verwaltungsmodul (71) zum Speichern des/der Betriebsparameter/s (P) angeschlossen ist, um sie zu vergleichen und/oder an die entfernte Verarbeitungseinheit (80) zu übertragen.

12. Maschine nach einem der Ansprüche 9 bis 11, **dadurch gekennzeichnet, dass** das Kommunikationsmodul (72) vom Ruhezustand in den Betriebszustand durch ein Verbindungsanfragesignal (130) gesteuert wird, das durch die entfernte Verarbeitungseinheit (80) übertragen wird, wobei das Kommunikationsmodul (72) dazu fähig ist, das entfernte Befehls-/Anpassungssignal (120) zu empfangen, wenn es im Betriebszustand ist.

13. Maschine nach Anspruch 8, **dadurch gekennzeichnet, dass** das entfernte Befehls-/Anpassungssignal (120) durch die entfernte Verarbeitungseinheit (80) in Abhängigkeit eines Hauptsignals (140) erzeugt wird, das von einem Computer (90) übertragen wird, der entfernt mit der entfernten Verarbeitungseinheit (80) verbunden ist.

## Revendications

1. Machine pour la production et la distribution de produits alimentaires liquides ou semi-liquides, comprenant :
- un bac de retenue (2) pour un produit liquide de base ;
- un circuit de traitement (10) pour ledit produit liquide de base, de sorte à obtenir un produit alimentaire liquide ou semi-liquide ;
- des moyens de distribution (30) pour distribuer ledit produit alimentaire ;
- un ou plusieurs actionneurs (40) agissant sur ledit produit de base, sur ledit produit alimentaire et/ou sur des parties de ladite machine (1) ;
- un ou plusieurs capteurs (50) pour détecter un ou plusieurs paramètres de fonctionnement (P) de ladite machine (1),
- une unité d'interfaçage (70) opérationnellement associée à au moins l'un desdits un ou plusieurs capteurs (50) pour recevoir un paramètre respectif desdits un ou plusieurs paramètres de fonctionnement (P) et pour le transmettre à une unité de traitement à distance (80) ;
- une unité de traitement locale (60) connectée au moins audit capteur (50) et audit actionneur (40), et conçue pour contrôler le fonctionnement de la machine (1) ;
ladite unité d'interfaçage (70) comprenant un module de gestion (71) opérationnellement associé à ladite unité de traitement locale (60) afin de recevoir ledit paramètre de fonctionnement respectif (P), de le comparer avec une valeur de référence et de transmettre un signal de notification (100) à ladite unité de traitement à distance (80), selon ladite comparaison ; ledit module de gestion (71) étant conçu pour effectuer une série d'opérations d'envoi ou de transmission, après la transmission susvisée dudit signal de notification (100) à ladite unité de traitement à distance (80), pour envoyer une série de mesures relevées dudit paramètre de fonctionnement respectif (P) à ladite unité de traitement à distance (80), pendant un intervalle de temps prédéterminé ;
ladite série de mesures relevées comprenant des mesures temporellement antérieures à l'envoi dudit signal de notification (100) et/ou des mesures temporellement postérieures à l'envoi dudit signal de notification (100).

2. Machine selon la revendication précédente, **caractérisée en ce que** ladite valeur de référence est déterminée par une lecture précédente dudit paramètre de fonctionnement respectif (P).

3. Machine selon la revendication 1, **caractérisée en ce que** la transmission dudit paramètre de fonctionnement respectif (P) à ladite unité de traitement à distance (80) a commencé à une limite temporelle prédéterminée.

4. Machine selon la revendication 1, **caractérisée en ce que** la transmission dudit paramètre de fonctionnement respectif (P) à ladite unité de traitement à distance (80) a commencé après une situation de panne, de dysfonctionnement ou d'alarme de la machine (1).

5. Machine selon l'une quelconque des revendications précédentes, **caractérisée en ce que** ladite unité d'interfaçage (70) comprend aussi un module de communication (72) au moins pour envoyer ledit paramètre respectif (P) et/ou ledit signal de notification (100) à ladite unité de traitement à distance (80).

6. Machine selon la revendication précédente, **caractérisée en ce que** ledit module de communication (72) peut être activé d'une condition de repos dans laquelle il ne transmet aucun signal, à une condition de fonctionnement dans laquelle au moins il transmet des signaux.

7. Machine selon la revendication précédente, **caractérisée en ce que** ledit module de communication (72) se trouve normalement dans ladite condition de repos, ledit module de communication (72) activé à la condition de fonctionnement au moyen dudit module de gestion (71) pour envoyer ledit paramètre de fonctionnement respectif (P) à ladite unité de traitement à distance (80).

8. Machine selon l'une quelconque des revendications précédentes, **caractérisée en ce que** ladite unité d'interfaçage (70) est aussi opérationnellement associée à au moins l'un desdits un ou plusieurs actionneurs (40) pour permettre à ce dernier de recevoir un signal de commande/réglage local (110) en fonction d'un signal de commande/réglage à distance (120) envoyé à ladite unité d'interfaçage (40) par ladite unité de traitement à distance (80).

9. Machine selon les revendications 1 et 8, **caractérisée en ce que** ledit module de gestion est associé à ladite unité de traitement locale (60) pour permettre à cette dernière de recevoir ledit signal de commande/réglage à distance (120) et pour permettre à ladite unité de traitement locale (60) d'envoyer ledit signal de commande/réglage local (110) audit actionneur (40).

10. Machine selon la revendication précédente, **caractérisée en ce que** ladite unité d'interfaçage (70) comprend aussi une mémoire (73), ledit module de gestion (71) étant associé à ladite mémoire (73) pour mémoriser ledit signal de commande/réglage à distance (120), ladite unité de traitement locale (60) étant associée à ladite mémoire (73) pour lire ledit signal à distance (120) et pour générer ledit signal local (110), en fonction dudit signal à distance.

11. Machine selon la revendication précédente, **caractérisée en ce que** ladite mémoire (73) est opérationnellement associée audit module de gestion (71) pour mémoriser ledit/lesdits paramètre/s de fonctionnement (P), afin de les comparer et/ou de les transmettre à ladite unité de traitement à distance (80).

12. Machine selon l'une quelconque des revendications 9 à 11, **caractérisée en ce que** ledit module de communication (72) est activé de la condition de repos à la condition de fonctionnement par un signal de demande de connexion (130) transmis par ladite unité de traitement à distance (80), ledit module de communication (72) pouvant recevoir ledit signal de commande/réglage à distance (120) quand il se trouve dans la condition de fonctionnement.

13. Machine selon la revendication 8, **caractérisée en ce que** ledit signal de commande/réglage à distance (120) est généré par ladite unité de traitement à distance (80) en fonction d'un signal principal (140) transmis par un ordinateur (90) connecté à distance à ladite unité de traitement à distance (80).
